(19) Europäisches Patentamt
European Patent Office
Office européen des brevets

(11) **EP 3 032 463 B1**

## (12) FASCICULE DE BREVET EUROPEEN

(45) Date de publication et mention
de la délivrance du brevet:
**25.01.2023 Bulletin 2023/04**

(21) Numéro de dépôt: **15198436.6**

(22) Date de dépôt: **08.12.2015**

(51) Classification Internationale des Brevets (IPC):
**G06V 20/62** (2022.01)    **G06T 7/277** (2017.01)
**G06T 7/38** (2017.01)

(52) Classification Coopérative des Brevets (CPC):
**G06V 20/62; G06T 7/277; G06T 7/38;**
G06T 2207/30176

(54) **PROCÉDÉ ET DISPOSITIF DE SUIVI DE CARACTÈRES FIGURANT SUR UNE PLURALITÉ D'IMAGES D'UN FLUX VIDÉO D'UN TEXTE**

VERFAHREN UND VORRICHTUNG ZUR NACHVERFOLGUNG DER SCHRIFTZEICHEN, DIE AUF EINER VIELZAHL VON BILDERN IN EINEM VIDEOSTROM EINES TEXTES AUFTAUCHEN

METHOD AND DEVICE FOR TRACKING CHARACTERS ON A PLURALITY OF IMAGES OF A VIDEO STREAM OF A TEXT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.12.2014 FR 1462021**

(43) Date de publication de la demande:
**15.06.2016 Bulletin 2016/24**

(73) Titulaire: **Idemia Identity & Security France**
**92400 Courbevoie (FR)**

(72) Inventeurs:
• **BEAUDET, Jean**
**92445 ISSY-LES-MOULINEAUX (FR)**
• **ROUH, Alain**
**92445 ISSY-LES-MOULINEAUX (FR)**

(74) Mandataire: **Idemia**
**2, place Samuel de Champlain**
**92400 Courbevoie (FR)**

(56) Documents cités:
• **PHAN TRUNG QUY ET AL: "Recognition of Video Text through Temporal Integration", 2013 12TH INTERNATIONAL CONFERENCE ON DOCUMENT ANALYSIS AND RECOGNITION, IEEE, 25 août 2013 (2013-08-25), pages 589-593, XP032502862, ISSN: 1520-5363, DOI: 10.1109/ICDAR.2013.122 [extrait le 2013-10-10]**
• **MAJID MIRMEHDI ET AL: "Real-time text tracking in natural scenes", IET COMPUTER VISION, vol. 8, no. 6, 1 décembre 2014 (2014-12-01), pages 670-681, XP055224409, Michael Faraday House, Six Hills Way, Stevenage, Herts. SG1 2AY, UK ISSN: 1751-9632, DOI: 10.1049/iet-cvi.2013.0217**
• **RONG XUEJIAN ET AL: "Scene text recognition in multiple frames based on text tracking", 2014 IEEE INTERNATIONAL CONFERENCE ON MULTIMEDIA AND EXPO (ICME), IEEE, 14 juillet 2014 (2014-07-14), pages 1-6, XP032639210, DOI: 10.1109/ICME.2014.6890248**

EP 3 032 463 B1

## Description

Arrière-plan de l'invention

L'invention se rapporte au domaine général du traitement d'images de flux vidéo.

Elle concerne plus particulièrement un procédé de suivi (« tracking » en anglais) de caractères figurant sur des images (i.e. trames) d'un flux vidéo d'un document sur lequel se trouve un texte comprenant une ou plusieurs lignes de caractères. Chaque image du flux vidéo représente tout ou partie du texte. Aucune limitation n'est attachée au support de document considéré ni à la forme du texte, ni encore au type de capteurs utilisés pour acquérir les images. Ainsi un tel document est par exemple une page d'un document d'identité sur laquelle sont reportées des lignes de caractères aussi appelées MRZ, une plaque d'immatriculation, etc. Le capteur peut être une caméra, un capteur sans contact, tel qu'un capteur biométrique sans contact, un capteur embarqué sur un téléphone mobile tel un « smartphone », ou être même constitué d'une pluralité de capteurs, etc. devant le(s)quel(s) défile le document et qui est (sont) apte(s) à acquérir à distance des images partielles ou complètes du document en question.

De façon connue, les images constituant un flux vidéo diffèrent d'images statiques telles qu'elles peuvent être prises par un appareil photo par exemple, en ce qu'il existe entre les images du flux vidéo une redondance temporelle : une même ligne de texte apparaît en effet sur plusieurs trames vidéo contiguës. Cette redondance temporelle peut être exploitée pour améliorer les chances de localiser un texte et de reconnaître les caractères de ce texte, comme des parties du texte apparaissent sous des conditions variables d'une trame (image) à l'autre. Le but du suivi de caractères figurant sur une pluralité d'images d'un flux vidéo est ainsi de déterminer la position de ces caractères de manière continue et précise dans les scènes dynamiques reportées par les images du flux vidéo.

On connait le document « Recognition of Video Text through Temporal Intégration » (PHAN TRUNG QUY ET AL, 2013 12TH INTERNATIONAL CONFERENCE ON DOCUMENT ANALYSIS AND RECOGNITION, IEEE, 25 août 2013, pages 589-593), qui décrit un procédé de reconnaissance de texte vidéo s'appuyant sur une intégration temporelle réalisée sur plusieurs images.

Aussi, on connait le document « Real-time text tracking in natural scènes » (MAJID MIRMEHDI ET AM, IET COMPUTER VISION, vol. 8, no. 6, 1er décembre 2014, pages 670-681) qui décrit un procédé de détection, de reconnaissance et de suivi de texte.

Dans l'état actuel de la technique, la plupart des méthodes de suivi s'appuient sur une formation d'une image complète du document par alignement des images partielles, aussi connu sous l'appellation de « mosaicing ». Cet alignement peut être réalisé notamment par corrélation des images entre elles (ou « template matching » en anglais) ou par extraction de points remarquables tels que par exemple des points appelés SIFT (Scale Invariant Feature Transform) tels que décrit dans le document de D.G. Lowe intitulé « Object recognition from local scale-invariant features », Proceedings of the International Conférence on Computer Vision, vol. 2, pages 1150-1157, 1999. La reconstruction de l'image complète permet ensuite une lecture conventionnelle du document par reconnaissance des caractères sur l'image.

En fonction des documents considérés, l'image reconstruite par mosaicing peut présenter des défauts de reconstruction. Par exemple, pour un document d'identité et la lecture des lignes MRZ, l'alignement des images partielles est rendu difficile par la répétition ou la quasi-périodicité de certains motifs de caractères (ex. chevrons) qui peuvent créer des ambiguïtés de correspondance compliquées à résoudre.

Le document de S. Uchida et al. intitulé « Mosaicing-by-recognition for video-based text recognition », Pattern Recognition 41.4, 2008, pages 1230-1240 propose une méthode s'appuyant sur un alignement des images par reconnaissance des caractères : les problèmes de mosaicing et de reconnaissance sont formulés comme un unique problème d'optimisation, ce qui permet de gérer de manière simultanée et collaborative ces deux aspects et obtenir ainsi une plus grande précision. Un alignement des caractères est réalisé à partir de leur reconnaissance et en s'appuyant sur une ressemblance des images entre elles à des instants successifs.

Toutefois, comme souligné d'ailleurs par Uchida et al., cette méthode est relativement complexe.

En outre, la reconnaissance de caractères telle que proposée dans Uchida et al. est particulièrement sensible aux variations des conditions d'acquisition des images (ex. existence d'un reflet entre deux images, échantillonnage, variation d'éclairage, présence d'un flou, etc.). Ainsi, une faible variation dans l'image peut résulter en une détection erronée : un exemple typique est une faible variation d'apparence d'un caractère « 2 » qui peut amener à sa reconnaissance en tant que « Z ».

Il existe donc un besoin d'une méthode de suivi d'images vidéo ne présentant pas de tels inconvénients.

Objet et résumé de l'invention

L'invention répond notamment à ce besoin en proposant un procédé de suivi de caractères selon la revendication 1.

Corrélativement l'invention vise également un dispositif de suivi de caractères selon la revendication 14.

Par suivi, on entend ici reconnaître quelle instance de caractère(s) dans une image correspond à telle autre dans une autre image.

Ainsi l'invention, contrairement à l'état de la technique, ne s'appuie ni sur du mosaicing, ni sur une reconnaissance de caractères qui peut s'avérer très sensible aux conditions d'acquisition des images.

Au contraire, l'invention propose une méthode de suivi de caractères d'un texte figurant sur une pluralité d'images d'un flux vidéo, basée sur l'évaluation d'hypothèses d'alignement déterminées en comparant des lignes d'au moins deux images distinctes représentant une même partie de texte, après prise en compte du mouvement du texte entre les deux images à l'aide d'une prédiction de ce mouvement.

La première image désigne l'image considérée à l'instant courant par l'invention, tandis que la deuxième image désigne l'image dont les lignes de caractères sont associées aux lignes de caractères de la première image pour réaliser le suivi de caractères. La deuxième image peut être indifféremment une image acquise à un instant antérieur à la première image ou au contraire à un instant postérieur. Ainsi, selon la chronologie de la première et de la deuxième image, par « mouvement subi par le texte entre la première image et la deuxième image » on entend le mouvement qu'a subi le texte sur la première image par rapport à sa position antérieure sur la deuxième image lorsque la deuxième image est antérieure à la première image (i.e. le mouvement a lieu entre la deuxième image et la première image à proprement parler), ou le mouvement qu'a subi le texte sur la deuxième image par rapport à sa position antérieure sur la première image lorsque la deuxième image est postérieure à la première image (i.e. le mouvement a lieu entre la première image et la deuxième image à proprement parler).

Le modèle de prédiction utilisé pour prédire le mouvement du texte entre les deux images dépend bien entendu des conditions d'acquisition des images, et peut être lié notamment à la forme du capteur. Ainsi par exemple, certains capteurs biométriques sans contact peuvent imposer un mouvement du support de texte qui, au premier ordre, est dans un plan parallèle au capteur de la caméra. Un tel mouvement dans l'image entre deux instants peut être approximé par une composition d'une rotation et d'une translation et une hypothèse de mouvement à vitesse constante peut être faite.

Chaque hypothèse d'alignement déterminée par l'invention caractérise un déplacement entre les images liées notamment aux conditions d'acquisition des images, et modélisé par une transformation géométrique comprenant par exemple une rotation et/ou une translation. Chaque hypothèse déterminée à partir de la prédiction du mouvement du texte entre les images est ensuite évaluée. Préférentiellement, les hypothèses d'alignement sont déterminées à partir d'une ligne de caractères de la première image (ex. la première ligne) et d'une ligne de caractères de la deuxième image après prise en compte de la prédiction de mouvement, puis validée via l'évaluation des métriques sur toutes les autres lignes des images (incluant ou non la ligne utilisée pour déterminer les hypothèses) le cas échéant.

Par exemple, dans un mode particulier de réalisation, au cours de l'étape d'évaluation, la métrique associée à une hypothèse d'alignement est évaluée en tenant compte de toutes les lignes de caractères de la première image ou de toutes les lignes de caractères de la première image excepté la première ligne de caractères pour laquelle cette hypothèse d'alignement a été déterminée.

L'évaluation de chaque hypothèse d'alignement se fait avantageusement au moyen de métriques continues, calculées à partir de signatures de caractères mis en correspondance par l'hypothèse d'alignement. De telles signatures sont spécifiques à chaque caractère ; elles permettent toutefois de s'affranchir de la reconnaissance à proprement parler des caractères qui peut être problématique dans certains cas comme mentionné précédemment. En d'autres mots, conformément à l'invention, aucune reconnaissance de caractères n'est mise en oeuvre lors de l'étape d'évaluation. Les signatures calculées sont par exemple des descripteurs calculés à partir d'un binarisation des caractères, comme des moments géométriques, ou des descripteurs relevant de l'analyse fréquentielle spatiale telles que des composantes de Fourier, des réseaux de bancs de filtres ou encore des descripteurs de type SIFT mentionnés précédemment. Le recours à de telles signatures plutôt qu'à une reconnaissance des caractères à proprement parler telle que proposée par Uchida et al. ou une comparaison des images pixel par pixel permet d'obtenir une métrique continue, plus robuste aux phénomènes de variations d'images. En d'autres mots, une petite variation se traduit par une variation douce de la métrique, qui reste continue. Au contraire, le recours à un alphabet de caractères discrétisé pour la reconnaissance de caractères résulte en une discontinuité des métriques qui peut introduire des erreurs, difficiles à gérer ; par exemple un « 2 » peut du fait d'une légère variation d'image être reconnu de façon erronée en « Z ».

En outre, l'invention est de complexité raisonnable par rapport à la technique proposée par Uchida et al, notamment en termes de temps de calcul nécessaire.

Si plusieurs métriques d'alignement correspondant respectivement à plusieurs hypothèses d'alignement sont évaluées pour une même image, le procédé de suivi selon l'invention peut comprendre une étape de sélection d'une hypothèse d'alignement pour cette image correspondant à la métrique de concordance de caractères optimale sur la pluralité d'hypothèses d'alignement (i.e. maximale ou minimale selon la définition de la métrique considérée).

Il convient de noter que le procédé de suivi selon l'invention a de nombreuses applications. Les métriques évaluées conformément à l'invention peuvent être par exemple utilisées ensuite pour la reconnaissance de caractères, pour réaliser du mosaicing, etc.

Dans un mode particulier de réalisation, l'étape de détermination comprend en outre une étape de vérification d'une compatibilité entre la première ligne de caractères de la première image et la deuxième ligne de caractères de la deuxième image après application de la prédiction de mouvement, une hypothèse d'alignement étant déterminée seulement si la première ligne de caractères de la première image est compatible avec la deuxième ligne de caractères de la deuxième image.

Par compatible on entend ici que les lignes qui sont considérées pour déterminer une hypothèse d'alignement sont susceptibles de représenter une même ligne du texte que les images représentent.

Ainsi, par exemple, la première ligne de caractères de la première image et la deuxième ligne de caractères de la deuxième image sont considérées comme compatibles si une distance évaluée entre la première ligne de caractères et la deuxième ligne de caractères en prenant en compte le mouvement prédit (autrement dit, après application de la prédiction de mouvement) est inférieure à un seuil prédéterminé.

La prise en compte de lignes compatibles permet de limiter la complexité d'implémentation de l'invention et notamment de réduire le nombre d'hypothèses d'alignement évaluées.

Dans un mode particulier de réalisation, au cours de l'étape de détermination, une hypothèse d'alignement d'une première ligne de caractères de la première image avec une deuxième ligne de caractères de la deuxième image après application de la prédiction de mouvement est déterminée si la première ligne et la deuxième ligne présentent un nombre de caractères mis en correspondance par l'alignement supérieur à un seuil prédéterminé.

De même, ce mode de réalisation permet également de limiter la complexité d'implémentation de l'invention en ne retenant que les hypothèses les plus probables de déplacement (i.e. celles qui mènent à un nombre de caractères mis en correspondance plus élevé). Par mise en correspondance, on entend ici que sous l'effet de l'alignement associé à l'hypothèse considérée, des caractères de chaque ligne sont mis en face, i.e. superposés. Cette mise en correspondance ne présuppose pas de la concordance des caractères à proprement parler.

Dans un mode particulier de réalisation, l'étape d'évaluation de la métrique associée à chaque hypothèse d'alignement comprend :

- une évaluation pour chaque ligne de caractères de la première image, d'une combinaison statistique des distances entre les signatures calculées sur les caractères de cette ligne de caractères et les signatures calculées sur les caractères correspondants d'une ligne de caractères de la deuxième image compatible avec cette ligne de caractères ; et
- un calcul d'une combinaison statistique des combinaisons statistiques des distances ainsi évaluées sur les lignes de caractères de la première image.

Cette combinaison statistique ne tient compte que de la ressemblance entre les caractères alignés par l'hypothèse d'alignement (pas de considération géométrique notamment). La combinaison statistique considérée peut être une moyenne des distances ou de manière plus générale n'importe quel filtrage statistique.

Dans une variante de réalisation, l'étape d'évaluation peut comprendre en outre une détermination d'un déplacement de la ligne de caractères de la première image par rapport à la ligne de caractères de la deuxième image et une pondération de la combinaison statistique des distances entre les signatures par ce déplacement.

La pondération appliquée peut être notamment une pénalité dérivée du déplacement : plus le déplacement est important, plus la pénalité est élevée. Cette variante permet de tenir compte d'une erreur de positionnement des lignes de caractères lors de leur alignement conformément à l'hypothèse d'alignement considérée, autrement dit elle introduit des considérations géométriques dans la métrique évaluée. Typiquement, plus la géométrie indique un éloignement entre les lignes de caractères, plus la pénalité appliquée pour pondérer les distances est élevée.

Dans un mode particulier de réalisation, si une ligne de caractères de la première image est compatible avec plusieurs lignes de caractères de la deuxième image, la métrique ne tient compte que de la combinaison statistique des distances pondérée la plus faible parmi les combinaisons statistiques des distances évaluées sur lesdites plusieurs lignes de caractères de la deuxième image.

Il s'agit pas ce biais de ne retenir que l'hypothèse d'alignement la plus favorable, c'est-à-dire celle qui conduit à la plus forte ressemblance des caractères alignés. Si une même ligne de caractères est compatible en apparence avec plusieurs lignes de caractères, on élimine ainsi des hypothèses d'alignement peu probables.

Dans un mode particulier de réalisation, le procédé comprend en outre une étape de reconnaissance de caractères du texte en utilisant les métriques de concordance de caractères évaluées pour les hypothèses d'alignement.

Comme mentionné précédemment, le procédé de suivi peut être couplé à une reconnaissance des caractères du texte représenté sur les images. Cette reconnaissance qui s'appuie sur les hypothèses d'alignement évaluées conformément à l'invention est avantageusement robuste et fiable.

Dans un mode particulier de réalisation, les différentes étapes du procédé de suivi sont déterminées par des instructions de programmes d'ordinateurs.

En conséquence, l'invention vise aussi un programme d'ordinateur sur un support d'informations, ce programme étant susceptible d'être mis en oeuvre dans un dispositif de suivi ou plus généralement dans un ordinateur, ce programme comportant des instructions adaptées à la mise en oeuvre des étapes d'un procédé de suivi tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations (ou support d'enregistrement) lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy dise) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

L'invention vise également un système comprenant :

- au moins un capteur apte à acquérir une pluralité d'images d'un flux vidéo d'un texte comprenant au moins une ligne de caractères, ces images ayant été acquises au moyen dudit au moins un capteur à des instants différents et représentant au moins une partie du texte ; et
- un dispositif selon l'invention de suivi de caractères figurant sur la pluralité d'images.

Ce système bénéficie des mêmes avantages que le dispositif et le procédé de suivi, mentionnés précédemment.

On peut également envisager, dans d'autres modes de réalisation, que le procédé de suivi, le dispositif de suivi et le système selon l'invention présentent en combinaison tout ou partie des caractéristiques précitées.

Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :

- la figure 1 représente, de façon schématique, un système conforme à l'invention, dans un mode particulier de réalisation ;
- la figure 2 illustre un exemple de support de texte comprenant une pluralité de lignes de caractères, dont le système de la figure 1 acquiert une pluralité d'images et réalise un suivi de ces images conformément à l'invention ;
- la figure 3 illustre l'architecture matérielle d'un dispositif de suivi conforme à l'invention, dans un mode particulier de réalisation ;
- la figure 4 représente, sous forme d'ordinogramme, les principales étapes d'un procédé de suivi selon l'invention, dans un mode particulier de réalisation ;
- les figures 5A à 5C illustrent des exemples d'images d'un texte acquises à des instants différents ;
- la figure 6 représente deux lignes de l'image illustrée à la figure 5B après application d'un mouvement prédit par le dispositif de suivi de l'invention ;
- les figures 7A et 7B illustrent différentes conventions appliquées par le dispositif de suivi de l'invention pour déterminer des hypothèses d'alignement conformément à un mode particulier de réalisation ; et
- la figure 8 illustre deux lignes de caractères se chevauchant après application d'une transformation géométrique associée à une hypothèse d'alignement déterminée par le dispositif de suivi de l'invention conformément à un mode particulier de réalisation.

Description détaillée de l'invention

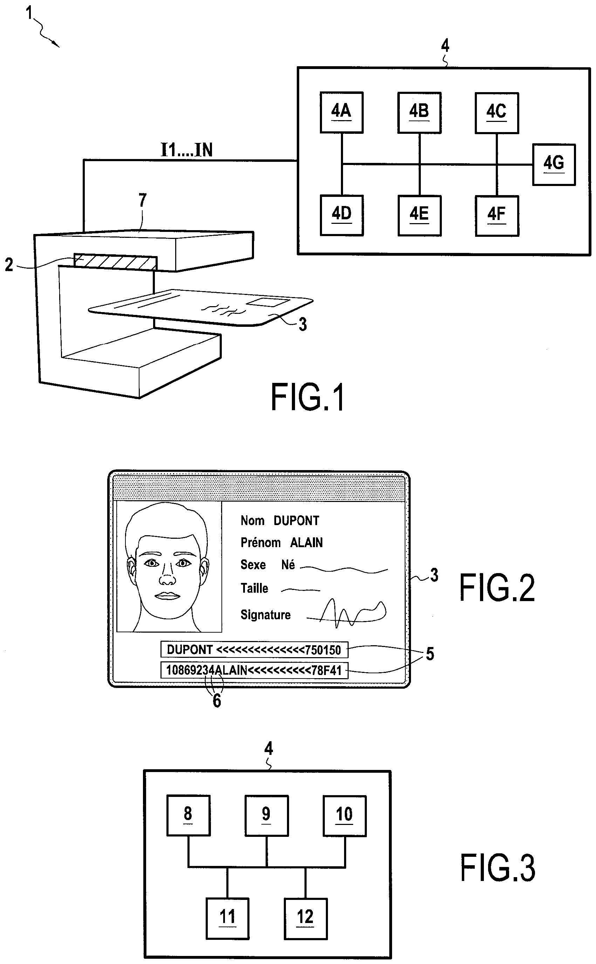

La **figure 1** représente, dans son environnement, un système 1 conforme à l'invention dans un mode particulier de réalisation.

Ce système comprend :

- un capteur 2, apte à acquérir une pluralité d'images (trames) d'un support de texte 3 formant un flux vidéo ; et
- un dispositif de suivi 4 conforme à l'invention, apte à réaliser un suivi de caractères à partir de la pluralité d'images acquises par le capteur 2.

Le support de texte 3 est par exemple ici un document d'identité sur lequel se trouve notamment en bas du document une pluralité de lignes 5 dites MRZ (deux lignes précisément dans cet exemple), comme illustré schématiquement à la **figure 2.** Chaque ligne comprend une pluralité de caractères 6. Ces caractères 6 sont par exemple ici des caractères alphanumériques (ex. caractères correspondant au nom de la personne, au code postal, etc.), des chevrons, etc.

Toutefois aucune limitation n'est attachée au type de support de texte considéré ni au nombre de lignes de caractères représentées sur ce support.

Le capteur 2 est, dans le mode de réalisation décrit ici, un capteur d'une caméra montée sur un dispositif 7 d'acquisition d'images d'un flux vidéo sans contact, connu en soi. La forme en U et le principe de fonctionnement de ce dispositif 7 imposent de présenter le document 3 entre les bras du dispositif selon un mouvement qui, au premier ordre, est réalisé dans un plan parallèle au capteur 2 de la caméra, comme illustré schématiquement à la figure 1.

Lors du passage du document 3 entre les bras du dispositif 7, le capteur 2 acquiert à distance une succession de trames ou d'images dites vidéo I1,...,IN constituant un flux vidéo sur lequel figure le document 3, N désignant un entier supérieur strictement à 1. Dans la description, N désigne le nombre d'images sur lequel le dispositif 4 réalise un suivi de caractères du document 3. Ce nombre N peut être inférieur au nombre d'images réellement acquises du document 3 par le dispositif d'acquisition 7. On suppose par exemple ici que lorsque le dispositif 4 de suivi détecte un nombre prédéterminé N0 d'images successives sans caractères parmi les images acquises, il arrête le suivi de caractères pour le flux vidéo considéré. Bien entendu d'autres techniques peuvent être envisagées pour identifier les images du flux vidéo sur lesquelles le suivi est réalisé.

Le champ de vue du capteur 2 étant pour ce type de dispositif relativement faible, chaque image vidéo In, n=1,...N, est ici une image partielle du document 3 ne représentant qu'une partie de chaque ligne MRZ, et acquise à un instant différent tn. Le nombre N d'images successives acquises par le capteur 2 dépend de la vitesse d'échantillonnage du capteur et de la vitesse de défilement du document 3 devant le capteur. Par ailleurs, on suppose que ces vitesses sont telles que deux images successives se recouvrent partiellement, autrement dit, ont en commun au moins une partie du document 3 et/ou du texte représenté sur ce document.

L'invention ne se limite toutefois pas à ce type de capteur et/ou de dispositif d'acquisition de flux vidéo. Ainsi par exemple on peut envisager d'autres capteurs opérant à distance tel que par exemple un capteur équipant un téléphone mobile intelligent ou « smartphone », ou tout autre type de capteur permettant d'acquérir des images successives d'un flux vidéo représentant un document.

Dans le mode de réalisation décrit ici, le dispositif de suivi 4 a l'architecture matérielle d'un ordinateur, illustrée schématiquement à la **figure 3.**

Il comporte notamment un processeur 8, une mémoire morte 9, une mémoire vive 10, une mémoire non volatile 11, ainsi que des moyens de communication 12 lui permettant de communiquer notamment avec le dispositif d'acquisition d'images 7 pour récupérer les images vidéo I1,...,IN acquises par celui-ci. Ces moyens de communication 12 intègrent par exemple un port USB (Universal Serial Bus) permettant de connecter au dispositif de suivi 4 le dispositif d'acquisition 7, ou une carte réseau lui permettant de communiquer par exemple sur un réseau de télécommunications local auquel est connecté également le dispositif d'acquisition 7 (ex. réseau WiFi (Wireless FIdelity) ou WLAN (Wireless Local Area Network)), etc.

La mémoire morte 9 du dispositif de suivi 4 constitue un support d'enregistrement conforme à l'invention, lisible par le processeur 8 et sur lequel est enregistré ici un programme d'ordinateur conforme à l'invention, comportant des instructions pour l'exécution des étapes d'un procédé de suivi conforme à l'invention.

En variante, le programme d'ordinateur peut se trouver sur un dispositif distant (ex. un serveur) auquel le dispositif de suivi 4 est connecté, par exemple via un réseau de télécommunications.

Ce programme d'ordinateur définit, de façon équivalente, des modules fonctionnels (logiciels ici) du dispositif de suivi 4 et leurs interactions, comme notamment, dans le mode de réalisation décrit ici, un module 4A de détection de caractères dans une image, un module 4B de prédiction d'un mouvement du texte d'une image à une autre et d'application de la prédiction de mouvement ainsi déterminée, un module 4C de détermination d'hypothèses d'alignement de lignes de caractères d'au moins deux images, un module 4D d'association de transformations géométriques à ces hypothèses d'alignement, un module 4E de calcul de signatures de caractères, un module 4F d'évaluation de métriques de concordance de caractères pour chacune de ces hypothèses d'alignement, et un module 4G de sélection de l'hypothèse d'alignement optimale pour chaque image considérée. Les fonctions mises en œuvre par ces modules 4A à 4G sont décrites ultérieurement en référence aux étapes du procédé de suivi selon l'invention.

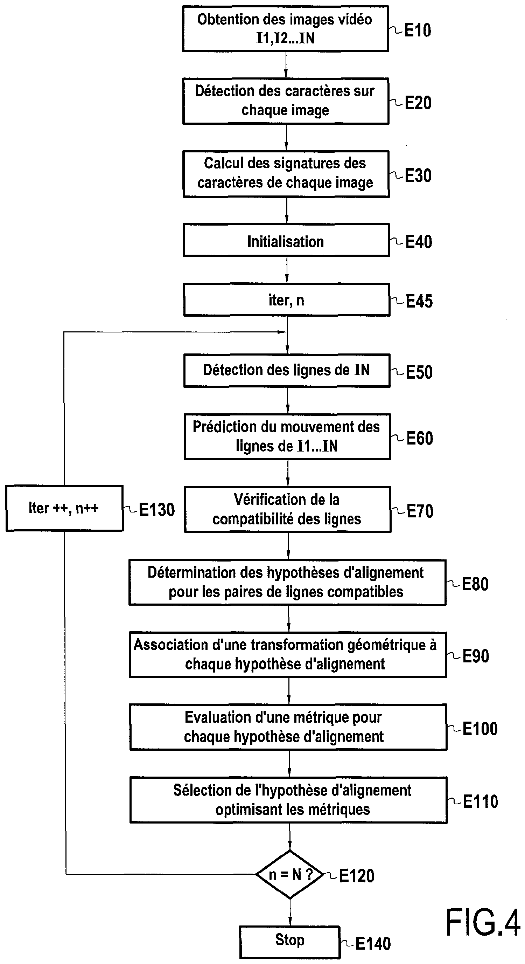

Nous allons maintenant décrire, en référence à la **figure 4,** les principales étapes d'un procédé de suivi selon l'invention, dans un mode particulier de réalisation dans lequel il est mis en œuvre par le dispositif de suivi 4 illustré à la figure 1.

On suppose que le dispositif de suivi 4 a obtenu, via ses moyens de communication 12, les images vidéo successives I1,...,IN du document 3 acquises par le capteur 2 (étape E10). Ces images sont stockées dans la mémoire non volatile 11 du dispositif de suivi 4.

Dans le mode de réalisation décrit ici, suite à l'obtention des images I1,...IN, le dispositif de suivi 4 détecte, par l'intermédiaire de son module 4A, les caractères présents sur chacune des images I1,...IN (étape E20). Le module 4A de détection de caractères utilise à cette fin des techniques de détection connues en soi, telles que par exemple une technique consistant en une binarisation de chaque image suivie d'une extraction des composantes connexes comme décrit en particulier dans le document de L. Eikvil intitulé « Optical Character Recognition », décembre 1993.

Puis, pour chaque caractère détecté sur une image In, n=1,...,N, le dispositif de suivi 4 calcule une signature de ce caractère grâce à son module 4E de calcul de signatures (étape E30).

Une signature d'un caractère est formée d'une ou de plusieurs caractéristiques extraites du caractère et qui permet(tent) sa reconnaissance et/ou sa reconstruction. Dans le mode de réalisation décrit ici, elle prend la forme d'un vecteur dont les composantes correspondent aux caractéristiques extraites du caractère. Elle est choisie préférentiellement de manière à être invariante vis-à-vis de certaines transformations (ex. changement d'échelle, contraste, rotation, etc.), ces transformations pouvant varier en fonction de l'application considérée.

De telles signatures sont décrites notamment dans le document de Trier et al. intitulé « Feature Extraction Methods for character recognition - A survey », Pattern recognition 29.5, 1996, pages 641-662, et dans le document de S. Belongie et al. intitulé « Shape Context : A new descriptor for shape matching and object recognition », NIPS vol. 2, 2000. Il s'agit par exemple de moments géométriques, de moments de Zernike, de descripteurs de Fourier, de contextes de forme, etc.

Dans l'exemple envisagé ici, on suppose par exemple que les signatures calculées sont des contextes de forme tels que décrits dans le document de S. Belongie cité ci-dessus.

Ces signatures présentent l'avantage d'être continues et sont connues pour être robustes à des variations d'image. Autrement dit, elles varient peu en présence d'une faible variation d'image.

A l'issue de l'étape E30, le dispositif de suivi 4 dispose donc, pour chaque image In, n=1,...,N, d'une pluralité de signatures se présentant sous la forme de vecteurs dont les composantes sont données par les caractéristiques de signature extraites pour chaque caractère présent dans l'image In (i.e. sur chaque ligne représentée sur l'image In).

Dans le mode de réalisation décrit ici, le dispositif de suivi 4 réalise ensuite le suivi du texte représenté sur le document 3 en traitant les images acquises par le capteur 2 de manière itérative.

Pour chaque itération *iter=n* (étape E45, étape test 120 et étape d'incrémentation E130), le dispositif de suivi 4 considère l'image In acquise à l'instant tn (image « courante ») et la compare ici aux images acquises à des instants antérieurs à tn (ou au moins à l'une d'entre elles).

En variante, le dispositif de suivi 4 peut également la comparer à des images acquises à des instants postérieurs.

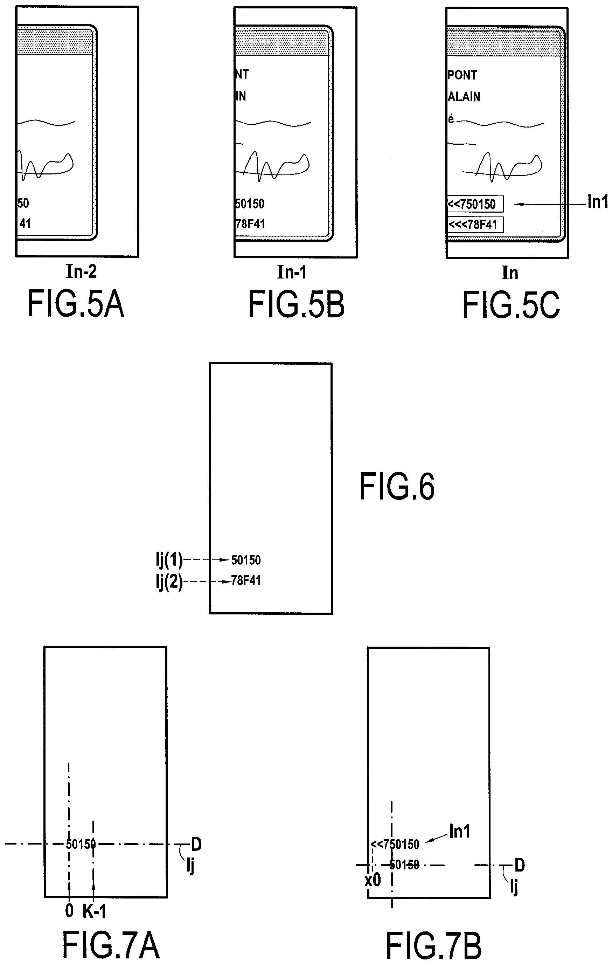

Pour faciliter la compréhension du traitement mis en œuvre par le dispositif de suivi 4 à chaque itération, les **figures 5A à 5C** représentent à titre illustratif seulement, trois images In-2, In-1 et In acquises successivement par le dispositif de suivi 4 et représentant une partie des deux lignes MRZ du document 3.

Plus spécifiquement, le dispositif de suivi 4 détecte tout d'abord sur l'image In, via son module 4A de détection de caractères, les lignes de texte comprenant des caractères (étape E50). On note In1 la première ligne de caractères représentée sur l'image In et détectée par le module 4A ; la ligne In1 est une première ligne de caractères d'une première image au sens de l'invention. Le module 4A détermine ici la position de chaque caractère de la ligne In1 et du barycentre de chaque caractère.

En variante, le module 4A peut déterminer la position de chaque caractère d'une autre ligne de caractères détectée sur l'image In que la première ligne.

Puis le dispositif de suivi 4, via son module de prédiction de mouvement 4B, prédit la position à l'instant tn des lignes de caractères détectées dans les images précédentes I1,...,In-1 (étape E60). Dans le mode de réalisation décrit ici, lorsqu'une même ligne de caractères a été détectée dans plusieurs images précédentes, on ne s'intéresse qu'à l'image la plus récente dans laquelle elle a été détectée. Dans l'exemple de la figure 5, le dispositif de suivi 4 ne retient ainsi que l'image In-1.

En variante, toutes les images peuvent être prises en compte ou seulement une sélection d'entre elles.

Il s'agit en d'autres mots pour le dispositif de suivi 4 et son module 4B de prédire le mouvement subi par le texte entre l'image In et les images précédentes, ou plus précisément ici, si l'on tient compte de la chronologie des images, de prédire le déplacement du texte entre l'image In-1 et l'image courante In. A cet effet, le module 4B s'appuie sur un modèle de mouvement déterminé en tenant compte des contraintes imposées par le capteur 2 et l'applique aux lignes de caractères de l'image précédente.

Plus précisément, la forme du dispositif d'acquisition 7 et de son capteur 2 amène à un mouvement du document 3 qui au premier ordre se trouve dans un plan parallèle au capteur 2 de la caméra, comme illustré à la figure 1. Il en résulte que le mouvement dans l'image entre deux instants t et t+Δt est approximé par une composition d'une translation T et d'une rotation R par rapport à un point arbitraire (ex. origine du repère image ici), notée $(ToR)_{t,t+\Delta t}$.

Le module 4B réalise une prédiction à « vitesse constante ». Ceci lui permet de déduire, à partir d'une translation-rotation $(ToR)_{tx,ty}$ estimée entre deux instants tx et ty, une translation-rotation $(ToR)_{ty,tz}$ extrapolée entre deux instants ty et tz.

Plus spécifiquement :

- si la rotation est négligeable, la composition (ToR) peut être approximée par une simple translation T. On a alors de façon évidente :

$$T_{ty,tz} = \frac{tz - ty}{ty - tx} T_{tx,ty}$$

- sinon, une composition d'une translation et d'une rotation peut s'exprimer sous la forme d'une rotation autour d'un certain centre noté c, soit : $(ToR)=R_c$ avec $c=(I-R)^{-1}T$ où I désigne l'identité. La composition $(ToR)_{ty,tz}$ s'exprime alors comme l'extrapolation de cette rotation $R_c$: il s'agit d'une rotation de même centre c, et d'angle $\theta_{ty,tz}$ tel que :

$$\theta_{ty,tz} = \frac{tz - ty}{ty - tx} \theta_{tx,ty}$$

Dans l'exemple envisagé ici, tz=tn est l'instant d'acquisition de l'image In, et tx et ty dépendent de l'image précédente considérée. Autrement dit, le module 4B déduit le mouvement (i.e. la composition ToR) subi par une ligne de texte entre une image antérieure à In acquise à un instant ty et l'image In à partir d'une estimation du mouvement réalisée à une itération précédente entre l'image acquise à l'instant ty et une image acquise à un instant tx. Par exemple, le module 4B déduit (prédit) le mouvement subi par une ligne donnée entre l'image In-1 et l'image In à partir d'une estimation du mouvement subi par le texte entre l'image In-2 et l'image In-1.

Le module 4B applique la ou les (si plusieurs images acquises à des instants différents sont considérées) prédictions de mouvement ainsi déterminées et obtient une ou plusieurs lignes Ij. Une ligne Ij désigne ainsi une ligne d'une image antérieure (ex. l'image In-1) après application de la prédiction du mouvement du texte entre l'image antérieure et l'image courante In.

La **figure 6** illustre les lignes Ij(1) et Ij(2) obtenues pour l'image In-1 de la figure 5.

Il convient de noter que lorsqu'iterest inférieur ou égal à 2, il n'est pas possible de prédire à vitesse constante le mouvement du texte. Une phase d'initialisation peut alors être mise en oeuvre pour l'itération *iter=1,* et un aménagement du suivi peut être considéré pour l'itération *iter=2,* comme détaillé davantage ultérieurement.

Puis, dans le mode de réalisation décrit ici, le dispositif de suivi 4, par l'intermédiaire de son module 4C de détermination d'hypothèses d'alignement, vérifie la compatibilité de chaque ligne Ij obtenue à l'étape E60 avec la ligne In1 (étape E70). Il s'agit par ce biais de ne conserver que les lignes Ij des images antérieures à In qui sont susceptibles de correspondre à la même ligne que In1.

A cet effet, pour chaque ligne Ij, le module 4C calcule les distances de chacune des extrémités de la ligne In1 à la droite infinie portant la ligne Ij (la ligne Ij tenant compte du mouvement prédit). La ligne Ij est considérée comme compatible avec la ligne In1 si et seulement si le maximum des deux distances calculées est inférieur à un seuil prédéterminé THRcomp. Le seuil THRcomp peut être déterminé empiriquement et est choisi en fonction d'un compromis complexité/performances.

Le module 4C ne considère dans la suite que les lignes déterminées comme compatibles avec la ligne In1. Dans l'exemple illustré à la figure 6, le module 4C ne retient ainsi que la ligne Ij(1).

Bien entendu, d'autres façons de tester la compatibilité entre deux lignes peuvent être considérées en variante.

Pour toute paire de lignes compatibles (In1,Ij), le module 4C détermine alors une ou plusieurs hypothèses d'alignement (étape E80). Chaque hypothèse d'alignement est définie par un triplet (In1,Ij,x) où x désigne un déplacement de caractères entre les lignes In1 et Ij.

A cette fin, dans le mode de réalisation décrit ici, un repère local est placé sur la ligne Ij tel que le premier caractère de cette ligne est à l'abscisse 0 et le dernier caractère à l'abscisse K-1, si K désigne le nombre de caractères représentés sur la ligne Ij. Ce repère est illustré à la **figure 7A.**

Le module 4C calcule ensuite la projection x0 du premier caractère de la ligne In1 sur la droite (infinie) D portant la ligne Ij, comme représenté à la **figure 7B.** L'abscisse correspondant à x0 constitue un déplacement en unité « caractère » entre les deux lignes In1 et Ij. On suppose par exemple x0=-2,1.

On note que dans le cas où l'espacement entre les caractères est variable, la conversion en unités caractères n'est pas nécessairement linéaire.

Puis pour tout déplacement x entier de caractères entre les lignes In1 et Ij, dans un voisinage de x0 (par exemple, dans l'intervalle [x0-2,x0+2]), le module 4C compte le nombre de caractères qui sont mis en correspondance entre In1 et Ij lorsqu'un alignement des deux lignes résultant du déplacement x est considéré.

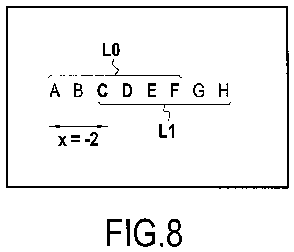

Pour illustrer la façon dont fonctionne le module 4C, considérons par exemple deux lignes L0 et L1 comprenant de manière tout-à-fait arbitraire les caractères suivants : L0=ABCDEF et L1=CDEFGH. Les lettres ne sont données que pour les besoins de l'illustration, elles ne sont pas connues du module 4C (pas de reconnaissance de caractères). On suppose que x0=-2,1 pour la ligne L0, le repère local étant fixé sur L1. Selon cet exemple, pour x=-2, les caractères mis en correspondance sont CDEF pour la ligne L0 et CDEF pour la ligne L1, comme illustré à la **figure 8** (sur cette figure, les caractères mis en correspondance par l'hypothèse d'alignement sont représentés en gras). Pour x=-1, les caractères mis en correspondance sont BCDEF pour la ligne L0 et CDEFG pour la ligne L1. Pour x=1, les caractères mis en correspondance sont ABCDE pour la ligne L0 et DEFGH pour la ligne L1, etc.

Le module 4C ne conserve que les déplacements x occasionnant un nombre de caractères mis en correspondance supérieur à un seuil THRalign prédéterminé. Par exemple THRalign=2. Chaque triplet (In1,Ij,x) ainsi déterminé constitue une hypothèse d'alignement au sens de l'invention de la ligne In1 avec la ligne Ij.

A l'issue de l'étape E80, le module 4C dispose donc d'au moins une d'hypothèse d'alignement pour chaque paire de lignes compatibles (In1,Ij).

Le dispositif de suivi 4 associe alors à chaque hypothèse d'alignement (In1,Ij,x) ainsi déterminée, par le biais de son module 4D, une transformation géométrique (ToR)$_{(In1,Ij,x)}$ (étape E90). Dans le mode de réalisation décrit ici, cette transformation géométrique est la combinaison d'une rotation R$_{(In1,Ij,x)}$ et d'une translation T$_{(In1,Ij,x)}$, au regard du modèle de mouvement précédemment décrit.

Plus précisément, le module 4D considère pour chaque hypothèse d'alignement, les segments de caractères mis en correspondance. L'angle de la rotation

$R_{(In1,lj,x)}$ est défini dans le mode de réalisation décrit ici comme l'angle de la rotation entre ces segments. La translation $T_{(In1,lj,x)}$ est définie comme celle qui réalise, après application de $R_{(In1,lj,x)}$ l'alignement entre les barycentres des segments.

Ainsi, chaque hypothèse d'alignement (In1,lj,x) définit une transformation géométrique $(ToR)_{(In1,lj,x)}$ spécifique résultant en l'alignement x entre les lignes In1 et lj.

Chaque hypothèse d'alignement (In1,lj,x) est ensuite évaluée par le dispositif de suivi 4 à l'aide de son module d'évaluation 4F (étape E100). A cet effet, le module d'évaluation 4F s'appuie sur les signatures calculées à l'étape E30 par le module de calcul de signatures 4E.

Plus spécifiquement, le module 4F évalue pour chaque hypothèse d'alignement une métrique de concordance de caractères. Cette métrique traduit, suivant sa valeur et la forme retenue pour celle-ci, une ressemblance ou une dissemblance entre les caractères mis en correspondance par chaque hypothèse d'alignement.

Dans le mode de réalisation décrit ici, la métrique évaluée par le module 4F tient compte de toutes les lignes In de l'image In. Elle permet en quelque sorte de valider les hypothèses d'alignement formulées par rapport à la ligne In1 sur les autres lignes de l'image In.

Pour évaluer cette métrique pour une hypothèse d'alignement donnée (In1,lj,x), le module 4F applique la transformation géométrique $(ToR)_{(In1,lj,x)}$ associée à cette hypothèse à toutes les lignes détectées dans l'image antérieure à In portant la ligne lj (ex. image In-1 ici). On désigne par Im les lignes ainsi obtenues après application de la transformation géométrique $(ToR)_{(In1,lj,x)}$. Il convient de noter que dans le mode de réalisation décrit ici, par définition de la transformation géométrique $(ToR)_{(In1,lj,x)}$, celle-ci est appliquée par le module 4F aux lignes de l'image antérieure considérée après lui avoir appliqué la prédiction de mouvement déterminée à l'étape E60.

Cette hypothèse n'est toutefois pas limitative. Ainsi, dans une variante de réalisation, la transformation géométrique associée à l'hypothèse d'alignement peut tenir compte de la prédiction de mouvement déterminée à l'étape E60 et être appliquée directement sur les lignes des images antérieures.

De façon similaire ou identique à ce qui a été réalisé à l'étape E70 par le module 4C, le module 4F vérifie la compatibilité des lignes Im obtenues avec les lignes In de l'image In, et ne retient que les paires de lignes (In,Im) compatibles.

Pour chaque paire (In,Im) de lignes compatibles, le module 4F détermine un déplacement y entre les lignes (de façon similaire ou identique à ce qui a été fait à l'étape E80 par le module 4C). Ce déplacement y est arrondi en un déplacement entier y'. Ce déplacement se traduit par une mise en correspondance d'un ou de plusieurs caractères entre les lignes.

Le module 4F évalue alors ici pour chaque ligne In de l'image In, une pénalité pp(In) définie comme la moyenne des distances entre :

- les signatures des caractères de la ligne In mis en correspondance par l'hypothèse d'alignement avec des caractères d'une ligne Im compatible avec la ligne In, et
- les signatures calculées sur les caractères de la ligne Im mis en correspondance avec les caractères précités de la ligne In.

Comme mentionné précédemment, dans l'exemple envisagé ici, les signatures calculées sont des contextes de forme (ou « shape contexts » en anglais) et la distance envisagée est une statistique de $\chi^2$ qui permet de comparer des contextes de forme entre eux, comme décrit dans le document de S. Belongie et al. cité précédemment.

Toutefois ces hypothèses ne sont en aucun cas limitatives et d'autres signatures peuvent être envisagées, de même que d'autres fonctions permettant de comparer des signatures entre elles (que l'on désigne par souci de simplification par « distances » dans la description), comme par exemple une norme L2 de la différence entre la signature des caractères. De même on peut d'envisager d'autres fonctions de filtrage ou de combinaison statistique qu'une moyenne pour calculer la pénalité pp associée à chaque ligne In.

Puis, le module 4F détermine une valeur de score sg à partir de la différence (i.e. écart géométrique) y'-y. Par exemple $sg=exp( (y'-y)^2)$.

Cette valeur de score sg est utilisée par le module 4F pour pondérer la moyenne pp(In) des distances précédemment calculée. Autrement dit :

$$pp(In) <-- pp(In) \times sg$$

Si plusieurs lignes Im sont compatibles avec la ligne In, le module 4F effectue le calcul de la pénalité pp(In) décrit ci-dessus pour chaque ligne Im et ne conserve ici comme valeur de pénalité pp(In) pour la ligne In que la valeur la plus faible prise sur l'ensemble des lignes Im compatibles avec la ligne In.

Puis le module 4F attribue comme métrique de concordance de caractères à l'hypothèse d'alignement considérée la moyenne prise sur toutes les lignes In de l'image In des valeurs de pénalité pp(In) ainsi évaluées.

En variante, d'autres combinaisons statistiques des valeurs de pénalité pp(In) peuvent être considérées en remplacement de la moyenne.

Le dispositif de suivi 4 sélectionne alors, par l'intermédiaire de son module de sélection 4G, comme hypothèse d'alignement finale l'hypothèse d'alignement correspondant ici à la métrique de concordance de caractères la plus faible évaluée pour l'image In, la métrique utilisée dans l'exemple envisagé ici prenant de faibles valeurs lorsque les caractères alignés par l'hypothèse d'alignement se ressemblent (étape E110). En d'autres mots et de manière générale, le module de sélection 4G sélectionne pour l'image In l'hypothèse d'alignement qui correspond à la métrique optimale parmi les métriques évaluées sur toutes les hypothèses d'alignement déterminées pour cette image.

Le dispositif de suivi 4 stocke cette hypothèse d'alignement en association avec l'image In, par exemple dans sa mémoire non volatile 11.

Les étapes E50 à E110 sont ensuite réitérées pour les N images acquises par le capteur 2 sur lesquelles le suivi est réalisé (étape test E120 et étape d'incrémentation E130).

En variante, le dispositif de suivi 4 stoppe les itérations dès lors qu'il a détecté un nombre prédéterminé d'images ne comportant plus de caractères.

Comme mentionné précédemment, il convient de noter que lorsque l'itération courante *iter* est inférieure ou égale à 2, il n'est pas possible de réaliser une prédiction du mouvement entre l'image courante et une image acquise antérieurement (ou postérieurement selon le cas de figure envisagé).

En effet, à *iter=1* (étape d'initialisation E40), le dispositif de suivi 4 ne dispose d'aucun historique d'alignement (c'est-à-dire d'hypothèse d'alignement entre deux images précédemment considérées) en mémoire. Ainsi, à l'itération *iter=1*, le dispositif de suivi 4 enregistre dans le mode de réalisation décrit ici, la ligne In1 de l'image In considérée à cette itération (par exemple ici I1) sans hypothèse d'alignement.

A l'itération *iter=2*, le dispositif de suivi 4 ne peut toujours pas réaliser à proprement parler de prédiction de mouvement à vitesse constante puisqu'il ne dispose que d'un élément en mémoire (associée à l'image I1 traitée à l'itération *iter=1*). Pour tenir compte de cette situation, plusieurs options peuvent être mises en oeuvre par le dispositif de suivi 4, comme par exemple :

- réaliser une prédiction à vitesse nulle ; et/ou
- prendre un plus grand intervalle autour de x0 pour le déplacement x à l'étape E80 ; et/ou
- ne pas pondérer les pénalités pp(ln) par les écarts géométriques y'-y à l'étape E100 (mais seulement prendre en compte les ressemblances entre les signatures).

A l'issue du traitement itératif (étape E140), le dispositif de suivi 4 dispose d'hypothèses d'alignement du texte représenté sur chaque image In avec le texte représenté sur les images la précédant, et d'une métrique évaluant chacune de ces hypothèses (une hypothèse d'alignement et la métrique associée pour chaque image In). Avantageusement, le traitement mis en oeuvre par le dispositif de suivi 4 lors des étapes E10 à E140 ne nécessite aucune reconnaissance de caractères qui peut s'avérer complexe et hasardeuse en fonction notamment des conditions d'acquisition des images et du texte représenté sur le document 3 (ex. polices de caractères utilisées, etc.).

Les hypothèses d'alignement et leurs métriques peuvent ensuite être utilisées à des fins diverses, comme par exemple pour la reconnaissance des caractères du texte du document 3, pour réaliser du mosaicing, etc. Ainsi par exemple, pour la reconnaissance de caractères, les hypothèses d'alignement stockées dans la mémoire 11 permettent d'identifier plusieurs instances d'un même caractère sur plusieurs images, de combiner les signatures d'un même caractère identifié sur cette pluralité d'images, et de reconnaître le caractère à partir de la combinaison en résultant. En variante, on peut d'abord reconnaître un caractère à partir des signatures puis à l'aide d'un mécanisme vote opéré sur les images représentant ce même caractère (et identifiées grâce aux hypothèses d'alignement), déterminer le caractère le plus probable correspondant.

**Revendications**

1.  Procédé de suivi de caractères figurant sur une pluralité d'images d'un flux vidéo (I1,...,IN) d'un texte comprenant au moins une ligne de caractères, lesdites images ayant été acquises au moyen d'au moins un capteur à des instants différents et représentant au moins une partie du texte, ce procédé comprenant :

    - une étape de détection (E20) des caractères présents sur chacune des images de la pluralité d'images du flux vidéo ;

        **caractérisé en ce que** le procédé comprend,
        pour au moins une première image du flux vidéo (In) comprenant au moins une première ligne (In1) détectée de caractères :

        - une étape d'application (E60) à au moins une deuxième ligne de caractères d'une deuxième image du flux vidéo d'une prédiction d'un mouvement à vitesse constante subi par le texte entre la première image et la deuxième image, la prédiction du mouvement étant obtenue par une estimation du mouvement subi par le texte entre la deuxième image et une troisième image du flux vidéo, le mouvement étant approximé par une composition d'une rotation et d'une translation ;
        - une étape de détermination (E80) d'au moins une hypothèse d'alignement de ladite au moins une première ligne de caractères (In1) de la première image avec ladite au moins une deuxième ligne de caractères (Ij) de la deuxième image après application de la prédiction du mouvement, l'hypothèse d'alignement étant obtenue en conservant uniquement des déplacements occasionnant un nombre de caractères mis en correspondance supérieure à un seuil prédéterminé, lesdits déplacements étant des déplacements entre caractères d'une paire de lignes ;

- une étape d'estimation (E90) pour chaque hypothèse d'alignement d'une transformation géométrique entre la première ligne de caractères et la deuxième ligne de caractères résultant en cet alignement ; et

- une étape d'évaluation (E100) pour chaque hypothèse d'alignement d'une métrique de concordance de caractères, cette métrique étant évaluée à partir de signatures calculées sur des caractères d'au moins une ligne de caractères de la première image et de signatures calculées sur des caractères d'au moins une ligne de caractères de la deuxième image mis en correspondance avec les caractères de ladite au moins une ligne de caractères de la première image après application de la transformation géométrique associée à l'hypothèse d'alignement.

2. Procédé de suivi selon la revendication 1 comprenant, lorsqu'une pluralité d'hypothèses d'alignement est déterminée pour ladite première image, une étape de sélection (E110) pour ladite première image de l'hypothèse d'alignement correspondant à la métrique de concordance de caractères optimale sur ladite pluralité d'hypothèses d'alignement.

3. Procédé de suivi selon la revendication 1 ou 2 dans lequel l'étape de détermination (E80) comprend en outre une étape de vérification (E70) d'une compatibilité entre la première ligne de caractères de la première image et la deuxième ligne de caractères de la deuxième image après application de la prédiction du mouvement, une hypothèse d'alignement étant déterminée seulement si la première ligne de caractères de la première image est compatible avec la deuxième ligne de caractères de la deuxième image.

4. Procédé de suivi selon la revendication 3 dans lequel au cours de l'étape de vérification, la première ligne de caractères de la première image et la deuxième ligne de caractères de la deuxième image sont considérées comme compatibles si une distance évaluée entre la première ligne et la deuxième ligne après application de la prédiction de mouvement est inférieure à un seuil prédéterminé.

5. Procédé de suivi selon l'une quelconque des revendications 1 à 4 dans lequel au cours de l'étape de détermination (E80), une hypothèse d'alignement d'une première ligne de caractères de la première image avec une deuxième ligne de caractères de la deuxième image après application de la prédiction de mouvement est déterminée si la première et la deuxième lignes présentent un nombre de caractères mis en correspondance par l'alignement supérieur à un seuil prédéterminé.

6. Procédé de suivi selon l'une quelconque des revendications 1 à 5 dans lequel la transformation géométrique associée à l'hypothèse d'alignement comprend une translation et/ou une rotation.

7. Procédé de suivi selon l'une quelconque des revendications 1 à 6 dans lequel au cours de l'étape d'évaluation (E100), la métrique associée à une hypothèse d'alignement est évaluée en tenant compte de toutes les lignes de caractères de la première image ou de toutes les lignes de caractères de la première image excepté la première ligne de caractères pour laquelle cette hypothèse d'alignement a été déterminée.

8. Procédé de suivi selon la revendication 7 dans lequel l'étape d'évaluation de la métrique associée à chaque hypothèse d'alignement comprend :

- une évaluation pour chaque ligne de caractères de la première image, d'une combinaison statistique des distances entre les signatures calculées sur les caractères de cette ligne et les signatures calculées sur les caractères correspondants d'une ligne de caractères de la deuxième image compatible avec cette ligne ; et

- un calcul d'une combinaison statistique des combinaisons statistiques des distances ainsi évaluées sur les lignes de caractères de la première image.

9. Procédé de suivi selon la revendication 8 dans lequel l'étape d'évaluation comprend en outre une détermination d'un déplacement de la ligne de caractères de la première image par rapport à la ligne de caractères de la deuxième image et une pondération de la combinaison statistique des distances entre les signatures par ce déplacement.

10. Procédé de suivi selon la revendication 9 dans lequel si une ligne de caractères de la première image est compatible avec plusieurs lignes de caractères de la deuxième image, la métrique ne tient compte que de la combinaison statistique des distances pondérée la plus faible parmi les combinaisons statistiques des distances évaluées sur lesdites plusieurs lignes de caractères.

**11.** Procédé de suivi selon l'une quelconque des revendications 1 à 10 comprenant une étape de reconnaissance de caractères du texte en utilisant les métriques de concordance de caractères évaluées pour les hypothèses d'alignement.

**12.** Programme d'ordinateur comportant des instructions pour l'exécution des étapes du procédé de suivi selon l'une quelconque des revendications 1 à 11 lorsque ledit programme est exécuté par un ordinateur.

**13.** Support d'enregistrement lisible par un ordinateur sur lequel est enregistré un programme d'ordinateur comprenant des instructions pour l'exécution des étapes du procédé de suivi selon l'une quelconque des revendications 1 à 11.

**14.** Dispositif de suivi de caractères figurant sur une pluralité d'images d'un flux vidéo d'un texte comprenant au moins une ligne de caractères, lesdites images ayant été acquises au moyen d'au moins un capteur à des instants différents et représentant au moins une partie du texte, ce dispositif comprenant :

un module de détection des caractères présents sur chacune des images de la pluralité d'images du flux vidéo ;
**caractérisé en ce que** le dispositif comprend des modules activés pour au moins une première image du flux vidéo (In) comprenant au moins une première ligne (In1) de caractères détectée :

- d'application à au moins une deuxième ligne de caractères d'une deuxième image du flux vidéo d'une prédiction d'un mouvement à vitesse constante subi par le texte entre la première image et la deuxième image, la prédiction du mouvement étant obtenue par une estimation du mouvement subi par le texte entre la deuxième image et une troisième image du flux vidéo, le mouvement étant approximé par une composition d'une rotation et d'une translation ;
- de détermination d'au moins une hypothèse d'alignement de ladite au moins une première ligne de caractères de la première image avec ladite au moins une deuxième ligne de caractères de la deuxième image après application de la prédiction du mouvement ;
- d'estimation pour chaque hypothèse d'alignement d'une transformation géométrique entre la première ligne de caractères et la deuxième ligne de caractères résultant en cet alignement ; et
- d'évaluation pour chaque hypothèse d'alignement d'une métrique de concordance de caractères, cette métrique étant évaluée à partir de signatures calculées sur des caractères d'au moins une ligne de caractères de la première image et de signatures calculées sur des caractères d'au moins une ligne de caractères de la deuxième image mis en correspondance avec les caractères de ladite au moins une ligne de caractères de la première image après application de la transformation géométrique associée à l'hypothèse d'alignement.

**15.** Système comprenant :

- au moins un capteur apte à acquérir une pluralité d'images d'un flux vidéo d'un texte comprenant au moins une ligne de caractères, ces images ayant été acquises au moyen dudit au moins un capteur à des instants différents et représentant au moins une partie du texte ; et
- un dispositif selon la revendication 14 de suivi de caractères figurant sur la pluralité d'images.

**Patentansprüche**

**1.** Verfahren zur Verfolgung von Zeichen, die auf einer Mehrzahl von Bildern eines Videostroms (I1,...,IN) eines Texts stehen, der wenigstens eine Zeichenzeile umfasst, wobei die Bilder mittels wenigstens eines Sensors zu unterschiedlichen Zeitpunkten erfasst wurden und wenigstens einen Abschnitt des Texts repräsentieren, dieses Verfahren umfassend:

- einen Schritt des Detektierens (E20) der Zeichen, die auf jedem der Bilder der Mehrzahl von Bildern des Videostroms vorhanden sind;

**dadurch gekennzeichnet, dass** das Verfahren Folgendes umfasst,
für wenigstens ein erstes Bild des Videostroms (In), das wenigstens eine erste detektierte Zeichenzeile (Inl) umfasst:

- einen Schritt des Anwendens (E60), auf wenigstens eine zweite Zeichenzeile eines zweiten Bilds des Videostroms, einer Vorhersage einer Bewegung bei gleichbleibender Geschwindigkeit, die der Text zwischen dem ersten Bild und dem zweiten Bild erfährt, wobei die Vorhersage der Bewegung durch eine Schätzung der Bewegung erhalten wird, die der Text zwischen dem zweiten Bild und einem dritten Bild des Videostroms erfährt, wobei die Bewegung durch eine Zusammensetzung einer Drehung und einer Translation angenähert wird;

- einen Schritt des Bestimmens (E80) wenigstens einer Hypothese zum Abgleich der wenigstens einen ersten Zeichenzeile (Inl) des ersten Bilds mit der wenigstens einen zweiten Zeichenzeile (Ij) des zweiten Bilds nach Anwendung der Vorhersage der Bewegung, wobei die Abgleichhypothese erhalten wird, indem nur Bewegungen beibehalten werden, die eine Anzahl von in Entsprechung gebrachten Zeichen verursachen, die über einem vorbestimmten Schwellenwert liegt, wobei die Bewegungen Bewegungen zwischen Zeichen eines Zeilenpaars sind;

- einen Schritt des Schätzens (E90), für jede Abgleichhypothese, einer geometrischen Umwandlung zwischen der ersten Zeichenzeile und der zweiten Zeichenzeile, die zu diesem Abgleich führt; und

- einen Schritt des Bewertens (E100), für jede Abgleichhypothese, einer Zeichenkonkordanzmetrik, wobei diese Metrik anhand von Signaturen, die aus Zeichen wenigstens einer Zeichenzeile des ersten Bilds berechnet werden, und Signaturen bewertet wird, die aus Zeichen wenigstens einer Zeichenzeile des zweiten Bilds berechnet werden, die mit den Zeichen der wenigstens einen Zeichenzeile des ersten Bilds nach Anwendung der geometrischen Umwandlung in Entsprechung gebracht werden, die der Abgleichhypothese zugeordnet ist.

2. Verfolgungsverfahren nach Anspruch 1, umfassend, wenn eine Mehrzahl von Abgleichhypothesen für das erste Bild bestimmt ist, einen Schritt des Auswählens (E110), für das erste Bild, der Abgleichhypothese, die der optimalen Zeichenkonkordanzmetrik entspricht, aus der Mehrzahl von Abgleichhypothesen.

3. Verfolgungsverfahren nach Anspruch 1 oder 2, wobei der Schritt des Bestimmens (E80) ferner einen Schritt des Überprüfens (E70) einer Kompatibilität zwischen der ersten Zeichenzeile des ersten Bilds und der zweiten Zeichenzeile des zweiten Bilds nach Anwendung der Vorhersage der Bewegung umfasst, wobei eine Abgleichhypothese nur dann bestimmt wird, wenn die erste Zeichenzeile des ersten Bilds mit der zweiten Zeichenzeile des zweiten Bilds kompatibel ist.

4. Verfolgungsverfahren nach Anspruch 3, wobei im Verlauf des Schritts des Überprüfens die erste Zeichenzeile des ersten Bilds und die zweite Zeichenzeile des zweiten Bilds als kompatibel angesehen werden, wenn ein Abstand, der zwischen der ersten Zeile und der zweiten Zeile nach Anwendung der Bewegungsvorhersage bewertet wird, unter einem vorbestimmten Schwellenwert liegt.

5. Verfolgungsverfahren nach einem der Ansprüche 1 bis 4, wobei im Verlauf des Schritts des Bestimmens (E80) eine Hypothese zum Abgleich einer ersten Zeichenzeile des ersten Bilds mit einer zweiten Zeichenzeile des zweiten Bilds nach Anwendung der Bewegungsvorhersage bestimmt wird, wenn die erste und zweite Zeile eine durch den Abgleich in Entsprechung gebrachte Anzahl von Zeichen aufweisen, die über einem vorbestimmten Schwellenwert liegt.

6. Verfolgungsverfahren nach einem der Ansprüche 1 bis 5, wobei die geometrische Umwandlung, die der Abgleichhypothese zugeordnet ist, eine Translation und/oder eine Drehung umfasst.

7. Verfolgungsverfahren nach einem der Ansprüche 1 bis 6, wobei im Verlauf des Schritts des Bewertens (E100) die Metrik, die einer Abgleichhypothese zugeordnet ist, unter Berücksichtigung aller Zeichenzeilen des ersten Bilds oder aller Zeichenzeilen des ersten Bilds außer die erste Zeichenzeile, für welche diese Abgleichhypothese bestimmt wurde, bewertet wird.

8. Verfolgungsverfahren nach Anspruch 7, wobei der Schritt des Bewertens der Metrik, die jeder Abgleichhypothese zugeordnet ist, Folgendes umfasst:

- eine Bewertung, für jede Zeichenzeile des ersten Bilds, einer statistischen Kombination der Abstände zwischen den Signaturen, die aus den Zeichen dieser Linie berechnet werden, und den Signaturen, die aus den entsprechenden Zeichen einer Zeichenzeile des zweiten Bilds, die mit dieser Zeile kompatibel ist, berechnet werden; und
- eine Berechnung einer statistischen Kombination der statistischen Kombinationen der Abstände, die so an den Zeichenzeilen des ersten Bilds bewertet wurden.

9. Verfolgungsverfahren nach Anspruch 8, wobei der Schritt des Bewertens ferner eine Bestimmung einer Bewegung der Zeichenzeile des ersten Bilds im Verhältnis zur Zeichenzeile des zweiten Bilds und eine Gewichtung der statistischen Kombination der Abstände zwischen den Signaturen um diese Bewegung umfasst.

**10.** Verfolgungsverfahren nach Anspruch 9, wobei, wenn eine Zeichenzeile des ersten Bilds mit mehreren Zeichenzeilen des zweiten Bilds kompatibel ist, die Metrik nur die kleinste gewichtete statistische Kombination der Abstände aus den statistischen Kombinationen der Abstände berücksichtigt, die an den mehreren Zeichenzeilen bewertet wurden.

**11.** Verfolgungsverfahren nach einem der Ansprüche 1 bis 10, umfassend einen Schritt des Erkennens von Zeichen des Texts unter Nutzung der Zeichenkonkordanzmetriken, die für die Abgleichhypothesen bewertet wurden.

**12.** Computerprogramm, aufweisend Anweisungen für die Ausführung der Schritte des Verfahrens nach einem der Ansprüche 1 bis 11, wenn das Programm von einem Computer ausgeführt wird.

**13.** Computerlesbares Speichermedium, auf dem ein Computerprogramm gespeichert ist, das Anweisungen für die Ausführung der Schritte des Verfolgungsverfahrens nach einem der Ansprüche 1 bis 11 umfasst.

**14.** Vorrichtung zur Verfolgung von Zeichen, die auf einer Mehrzahl von Bildern eines Videostroms eines Texts stehen, der wenigstens eine Zeichenzeile umfasst, wobei die Bilder mittels wenigstens eines Sensors zu unterschiedlichen Zeitpunkten erfasst wurden und wenigstens einen Abschnitt des Texts repräsentieren, diese Vorrichtung umfassend:

ein Modul zum Detektieren der Zeichen, die auf jedem der Bilder der Mehrzahl von Bildern des Videostroms vorhanden sind;
**dadurch gekennzeichnet, dass** die Vorrichtung Folgendes umfasst
Module, die für wenigstens ein erstes Bild des Videostroms (In) aktiviert sind, das wenigstens eine erste detektierte Zeichenzeile (Inl) umfasst:

- zur Anwendung, auf wenigstens eine zweite Zeichenzeile eines zweiten Bilds des Videostroms, einer Vorhersage einer Bewegung bei gleichbleibender Geschwindigkeit, die der Text zwischen dem ersten Bild und dem zweiten Bild erfährt, wobei die Vorhersage der Bewegung durch eine Schätzung der Bewegung erhalten wird, die der Text zwischen dem zweiten Bild und einem dritten Bild des Videostroms erfährt, wobei die Bewegung durch eine Zusammensetzung einer Drehung und einer Translation angenähert wird;
- zur Bestimmung wenigstens einer Hypothese zum Abgleich der wenigstens einen ersten Zeichenzeile des ersten Bilds mit der wenigstens einen zweiten Zeichenzeile des zweiten Bilds nach Anwendung der Vorhersage der Bewegung;
- zur Schätzung, für jede Abgleichhypothese, einer geometrischen Umwandlung zwischen der ersten Zeichenzeile und der zweiten Zeichenzeile, die zu diesem Abgleich führt; und
- zur Bewertung, für jede Abgleichhypothese, einer Zeichenkonkordanzmetrik, wobei diese Metrik anhand von Signaturen, die aus Zeichen wenigstens einer Zeichenzeile des ersten Bilds berechnet werden, und Signaturen bewertet wird, die aus Zeichen wenigstens einer Zeichenzeile des zweiten Bilds berechnet werden, die mit den Zeichen der wenigstens einen Zeichenzeile des ersten Bilds nach Anwendung der geometrischen Umwandlung in Entsprechung gebracht werden, die der Abgleichhypothese zugeordnet ist.

**15.** System, umfassend:

- wenigstens einen Sensor, der geeignet ist, eine Mehrzahl von Bildern eines Videostroms eines Texts zu erfassen, der wenigstens eine Zeichenzeile umfasst, wobei diese Bilder mittels des wenigstens einen Sensors zu unterschiedlichen Zeitpunkten erfasst wurden und wenigstens einen Abschnitt des Texts repräsentieren; und
- eine Vorrichtung nach Anspruch 14 zur Verfolgung von Zeichen, die auf der Mehrzahl von Bildern stehen.

**Claims**

**1.** Method for tracking characters in a plurality of images of a video stream (I1, ..., IN) of a text comprising at least one line of characters, said images having been acquired by means of at least one sensor at different instants and representing at least a part of the text, this method comprising:

- a step of detection (E20) of the characters present in each of the images of the plurality of images of the video stream;

**characterized in that** the method comprises, for at least one first image of the video stream (In) comprising at least one first detected line (Inl) of characters:

- a step of application (E60) to at least one second line of characters of a second image of the video stream of a prediction of a movement at constant speed undergone by the text between the first image and the second image, the prediction of the movement being obtained by an estimation of the movement undergone by the text between the second image and a third image of the video stream, the movement being approximated by a composition of a rotation and of a translation;

- a step of determination (E80) of at least one assumption of alignment of said at least one first line of characters (Inl) of the first image with said at least one second line of characters (Ij) of the second image after application of the prediction of the movement, the alignment assumption being obtained by retaining only displacements resulting in a number of characters correlated greater than a predetermined threshold, said displacements being displacements between characters of a pair of lines;

- a step of estimation (E90), for each alignment assumption, of a geometrical transformation between the first line of characters and the second line of characters resulting in this alignment; and

- a step of evaluation (E100), for each alignment assumption, of a character agreement metric, this metric being evaluated from signatures calculated on characters of at least one line of characters of the first image and signatures calculated on characters of at least one line of characters of the second image matched with the characters of said at least one line of characters of the first image, after application of the geometrical transformation associated with the alignment assumption.

2. Tracking method according to Claim 1, comprising, when a plurality of alignment assumptions is determined for said first image, a step of selection (E110), for said first image, of the alignment assumption corresponding to the optimal character agreement metric on said plurality of alignment assumptions.

3. Tracking method according to Claim 1 or 2, wherein the determination step (E80) further comprises a step of verification (E70) of compatibility between the first line of characters of the first image and the second line of characters of the second image after application of the prediction of the movement, an alignment assumption being determined only if the first line of characters of the first image is compatible with the second line of characters of the second image.

4. Tracking method according to Claim 3, wherein, during the verification step, the first line of characters of the first image and the second line of characters of the second image are considered as compatible if a distance evaluated between the first line and the second line after application of the movement prediction is lower than a predetermined threshold.

5. Tracking method according to any one of Claims 1 to 4, wherein, during the determination step (E80), an assumption of alignment of a first line of characters of the first image with a second line of characters of the second image after application of the movement prediction is determined if the first and the second lines have a number of characters matched by alignment above a predetermined threshold.

6. Tracking method according to any one of Claims 1 to 5, wherein the geometrical transformation associated with the alignment assumption comprises a translation and/or a rotation.

7. Tracking method according to any one of Claims 1 to 6, wherein, during the evaluation step (E100), the metric associated with an alignment assumption is evaluated by taking account of all the lines of characters of the first image or all the lines of characters of the first image except for the first line of characters for which this alignment assumption has been determined.

8. Tracking method according to Claim 7, wherein the step of evaluation of the metric associated with each alignment assumption comprises:

   - an evaluation, for each line of characters of the first image, of a statistical combination of the distances between the signatures calculated on the characters of this line and the signatures calculated on the corresponding characters of a line of characters of the second image compatible with this line; and
   - a calculation of a statistical combination of the statistical combinations of the distances thus evaluated on the lines of characters of the first image.

9. Tracking method according to Claim 8, wherein the evaluation step further comprises a determination of a displacement of the line of characters of the first image with respect to the line of characters of the second image and a weighting of the statistical combination of the distances between the signatures by this displacement.

**10.** Tracking method according to Claim 9, wherein, if a line of characters of the first image is compatible with several lines of characters of the second image, the metric takes account only of the statistical weighted combination of the distances that is the lowest out of the statistical combinations of the distances evaluated on said several lines of characters.

**11.** Tracking method according to any one of Claims 1 to 10, comprising a step of recognition of characters of the text by using the character agreement metrics evaluated for the alignment assumptions.

**12.** Computer program comprising instructions for the execution of the steps of the tracking method according to any one of Claims 1 to 11 when said program is run by a computer.

**13.** Computer-readable storage medium on which is stored a computer program comprising instructions for the execution of the steps of the tracking method according to any one of Claims 1 to 11.

**14.** Device for tracking characters in a plurality of images of a video stream of a text comprising at least one line of characters, said images having been acquired by means of at least one sensor at different instants and representing at least a part of the text, this device comprising:

a module for detecting the characters present in each of the images of the plurality of images of the video stream;
**characterized in that** the device comprises modules activated for at least one first image of the video stream (In) comprising at least one first line (Inl) of characters detected:

- of application, to at least one second line of characters of a second image of the video stream, of a prediction of a movement at constant speed undergone by the text between the first image and the second image, the prediction of the movement being obtained by an estimation of the movement undergone by the text between the second image and a third image of the video stream, the movement being approximated by a composition of a rotation and of a translation;
- of determination of at least one assumption of alignment of said at least one first line of characters of the first image with said at least one second line of characters of the second image after application of the prediction of the movement;
- of estimation, for each alignment assumption, of a geometrical transformation between the first line of characters and the second line of characters resulting in this alignment; and
- of evaluation, for each alignment assumption, of a character agreement metric, this metric being evaluated from signatures calculated on characters of at least one line of characters of the first image and signatures calculated on characters of at least one line of characters of the second image matched with the characters of said at least one line of characters of the first image after application of the geometrical transformation associated with the alignment assumption.

**15.** System comprising:

- at least one sensor capable of acquiring a plurality of images of a video stream of a text comprising at least one line of characters, these images having been acquired by means of said at least one sensor at different instants and representing at least a part of the text; and
- a device according to Claim 14 for tracking characters in the plurality of images.

**FIG.1**

Nom  DUPONT
Prénom  ALAIN
Sexe    Né
Taille
Signature

DUPONT <<<<<<<<<<<<<<750150
10869234ALAIN<<<<<<<<<78F41

**FIG.2**

**FIG.3**

```
┌─────────────────────────┐
│  Obtention des images vidéo  │ ⌐E10
│       I1,I2...IN        │
└─────────────────────────┘
             │
             ▼
┌─────────────────────────┐
│  Détection des caractères sur  │ ⌐E20
│      chaque image       │
└─────────────────────────┘
             │
             ▼
┌─────────────────────────┐
│  Calcul des signatures des  │ ⌐E30
│  caractères de chaque image  │
└─────────────────────────┘
             │
             ▼
┌─────────────────────────┐
│      Initialisation      │ ⌐E40
└─────────────────────────┘
             │
             ▼
┌─────────────────────────┐
│         iter, n          │ ⌐E45
└─────────────────────────┘
             │
             ▼
┌─────────────────────────┐
│   Détection des lignes de IN   │ ⌐E50
└─────────────────────────┘
             │
             ▼
┌─────────────────────────┐
│  Prédiction du mouvement des  │ ⌐E60
│     lignes de I1...IN     │
└─────────────────────────┘
             │
┌──────────────┐   ▼
│  Iter ++, n++  │⌐E130  ┌─────────────────────────┐
└──────────────┘        │    Vérification de la    │ ⌐E70
                        │  compatibilité des lignes  │
                        └─────────────────────────┘
                                   │
                                   ▼
┌──────────────────────────────────────────┐
│  Détermination des hypothèses d'alignement  │ ⌐E80
│   pour les paires de lignes compatibles    │
└──────────────────────────────────────────┘
                                   │
                                   ▼
┌──────────────────────────────────────────┐
│  Association d'une transformation géométrique à  │ ⌐E90
│     chaque hypothèse d'alignement       │
└──────────────────────────────────────────┘
                                   │
                                   ▼
┌──────────────────────────────────────────┐
│    Evaluation d'une métrique pour        │ ⌐E100
│    chaque hypothèse d'alignement        │
└──────────────────────────────────────────┘
                                   │
                                   ▼
┌──────────────────────────────────────────┐
│   Sélection de l'hypothèse d'alignement   │ ⌐E110
│      optimisant les métriques          │
└──────────────────────────────────────────┘
                                   │
                                   ▼
                              ◇ n = N ? ◇ ⌐E120
                                   │
                                   ▼
                              ┌─────────┐
                              │  Stop   │ ⌐E140
                              └─────────┘
```

FIG.4

In-2

**FIG.5A**

NT
IN

50150
78F41

In-1

**FIG.5B**

PONT
ALAIN

é

<<750150 ← In1
<<<78F41

In

**FIG.5C**

**FIG.6**

Ij(1)------→ 50150
Ij(2)------→78F41

**FIG.7A**

50150 --- D
Ij

0  K-1

**FIG.7B**

<<750150 ← In1
50150 --- D
x0  Ij

FIG.8

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Recognition of Video Text through Temporal Intégration. **PHAN TRUNG QUY et al.** 2013 12TH INTERNATIONAL CONFERENCE ON DOCUMENT ANALYSIS AND RECOGNITION. IEEE, 25 Août 2013, 589-593
- **MAJID MIRMEHDI.** Real-time text tracking in natural scènes. *IET COMPUTER VISION,* 01 Décembre 2014, vol. 8 (6), 670-681
- **D.G. LOWE.** Object recognition from local scale-invariant features. *Proceedings of the International Conférence on Computer Vision,* 1999, vol. 2, 1150-1157

- **S. UCHIDA et al.** Mosaicing-by-recognition for video-based text recognition. *Pattern Recognition,* 2008, vol. 41 (4), 1230-1240
- **TRIER et al.** Feature Extraction Methods for character recognition - A survey. *Pattern recognition,* 1996, vol. 29 (5), 641-662
- **S. BELONGIE et al.** Shape Context : A new descriptor for shape matching and object recognition. *NIPS,* 2000, vol. 2